# EUROPEAN PATENT APPLICATION

(11) **EP 4 578 552 A1**
(43) Date of publication of application: **02.07.2025**
(21) Application number: 23220658.1
(22) Date of filing: 28.12.2023
(51) Int. Cl.: B03B 9/06, B09B 3/30, B09B 3/32, C22B 1/00, C22B 7/00, C22B 11/02, B09B 101/95

(54) **MOBILE, AUTOMATIC SYSTEM FOR THE PROCESSING OF USED CERAMIC CATALYSTS AND RECOVERY OF NOBLE METALS IN OUTDOOR CONDITIONS**

(71) Applicant: Unimetal Recycling Spolka z ograniczona odpowiedzialnoscia, 32-540 Trzebinia (PL)
(72) Inventor: JURKOWSKI, Leszek, 32-540 Pila Koscielecka (PL)
(74) Representative: JD&P Patent Attorneys Joanna Dargiewicz & Partners

(57) **Abstract**

The object of the present invention is a mobile, automatic system for the treatment of spent ceramic catalysts and the recovery of precious metals under outdoor conditions, comprising components / machines housed in a transportable container.

## Description

The present invention relates to a mobile, automatic system for the processing of spent ceramic catalysts and the recovery of precious metals in an outdoor environment. The system / line for automatic vehicle catalytic recycling is built inside a container, in particular inside a shipping container.

The system according to the present invention extracts the ceramic monolith trapped in steel shells, then separates it from other materials present, such as magnetic, non-magnetic, paramagnetic scrap, gaskets, wool and many others.

The monolithic mass then undergoes two stages of grinding, homogenisation and testing the percentage of precious elements using an XRF spectrometer. The accompanying figures show sample dimensions, schematic arrangement of the machinery inside the container and sample machines. The container is designed for outdoor operation throughout the year.

European patent application EP3932534A1 discloses a method and apparatus for recycling waste materials containing precious metals.

The invention relates to processes for recycling waste materials containing precious metals in a fluidized bed furnace (100), comprising Phase I, start-up of the fluidized bed furnace; and Phase II, continuous processing of waste materials containing precious metals, characterized in that the fluidized bed furnace (100), during Phase II of the continuous processing of waste materials containing precious metals, operates in autothermal mode, whereby the process temperature is controlled by the filling level of the fluidized bed furnace (100) and the material flow rate through the furnace. The invention further provides a device comprising a fluidized bed furnace (100), for recycling waste materials, containing precious metals in a continuous autothermal process.

To date, no solutions with a similar scope of operation have been known. There was a need in the field for a mobile, automatic system for the processing spent ceramic catalysts and recovering precious metals under outdoor conditions.

Thus, the aim of the present invention was to develop a system, for the treatment of spent ceramic catalysts and the recovery of precious metals, that would not be limited to a single location, but would be freely mobile to locations abundant with spent ceramic catalysts, without the need to transport such catalysts to stationary facilities for the treatment of spent catalysts. This objective has been achieved by a mobile, automatic system for the processing of spent ceramic catalysts and the recovery of precious metals, under outdoor conditions, characterised in that it includes a piping cutting station, a bucket conveyor for transporting the cut catalyst and drying the catalyst with a weighing module, a guillotine for cutting the casing and crushing the catalyst monolith at the same time, an ascending conveyor for transporting the cut catalyst to the shaking drum, where the monolith is separated from the metal part of the catalyst, grate separator to receive the catalyst housing elements and larger pieces of catalyst monolith, which transports the steel elements of the catalyst to the compacting station to reduce their volume, magnetic separator with a vibrating table, which separates the catalyst material into ferromagnets, and the remaining material, which is transported to the fluidisation separator, and then, by belt conveyor to the crusher, hoovering system to remove ceramic dust, a compressor, a first vacuum transport for conveying the crushed material from the crusher to a grinder and a homogeniser, from where samples are taken by a sampling station for testing the precious metal content, and the remaining material is sent to the final storage area via a second vacuum transport, a power generator and a control system, with all components of the system housed in a transportable container.

Preferably, the system additionally comprises a signal column presenting the current operating status of the system.

Preferably, the grate separator has slots with a width of 25 mm.

Preferably, all the components of the system are housed in a shipping container.

Preferably, the system comprises an HMI control panel, preferably a touch panel for controlling all the machines in a manual mode and with the process start-up in automatic mode.

Preferably, the sampling station performs the following:
a. Inserting a sampler into the homogenizer and taking a sample
b. Pouring the sample material into a cup
c. Beating the material in the cup
d. Closing the cup with a stopper
e. Measuring the sample 4 times by rotating the sample 90 degrees after each measurement.
f. Printing the date and time of the measurement on the stopper
g. Sample storage
h. Re-performing the process for a second sample
i. Averaging of measurement results
j. Printing out a report for a customer.

Preferably, all the system components / all the machines are controlled from the main PLC, programmable logic controller.

The object of the present invention is depicted in the figures of the drawing, where:

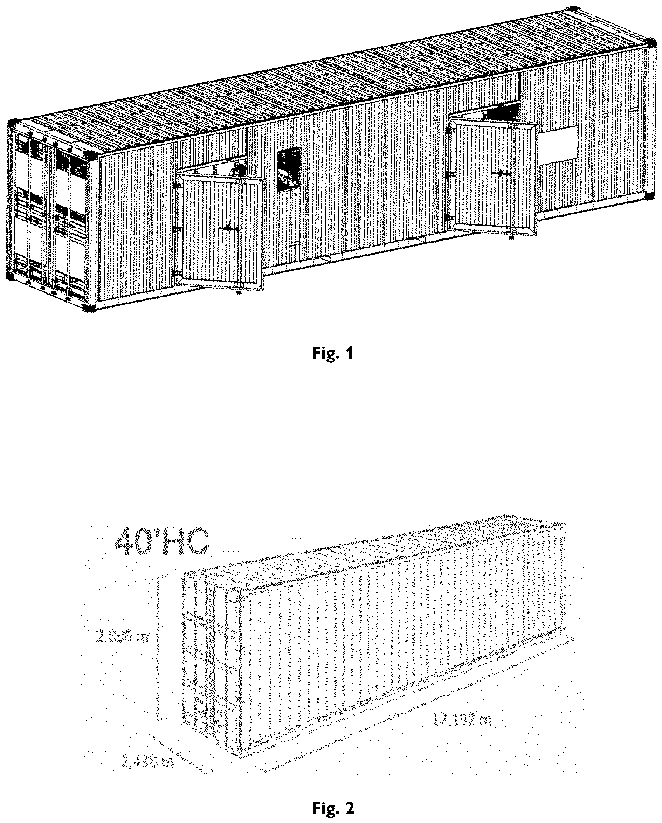

- Fig. 1-2: shows a view of the container with the system installed inside;

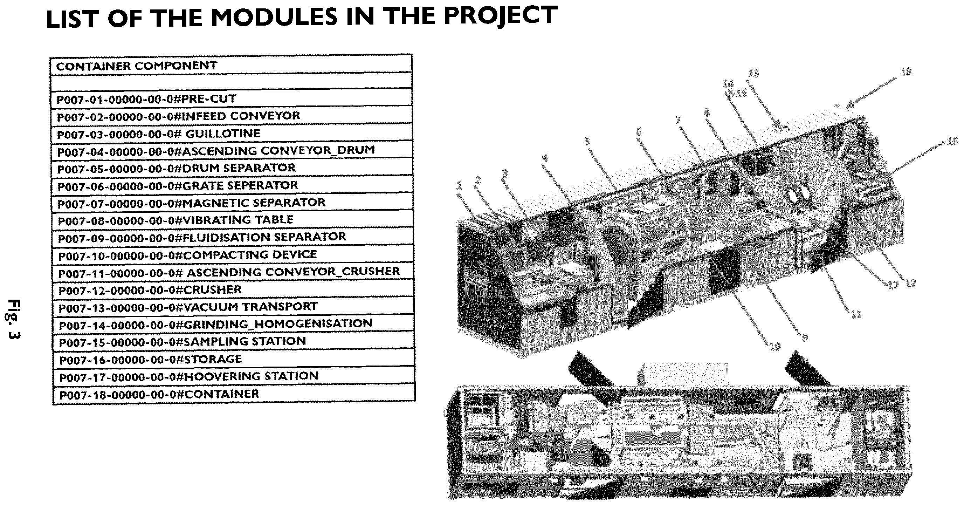

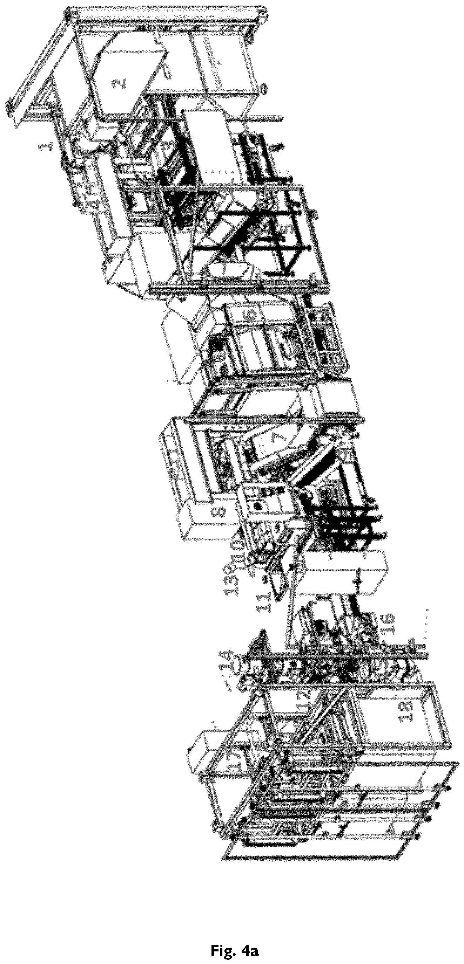

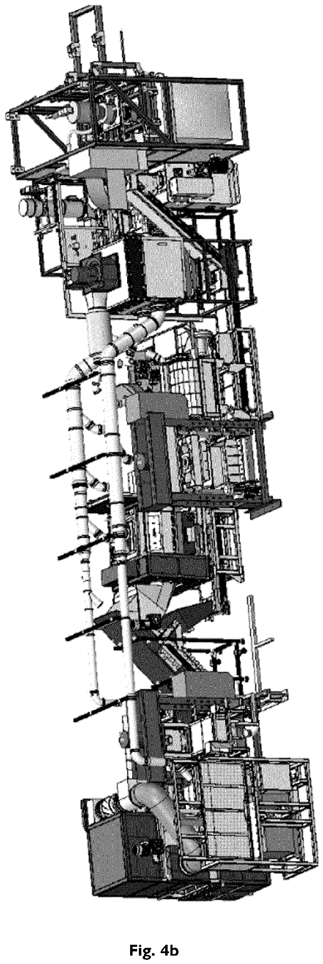

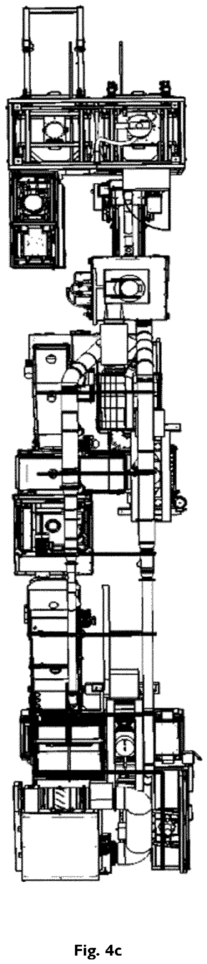

- Fig. 3, 4a-4c: show the structure of the system / line for automatic recycling of automotive catalysers with indication of the individual components;

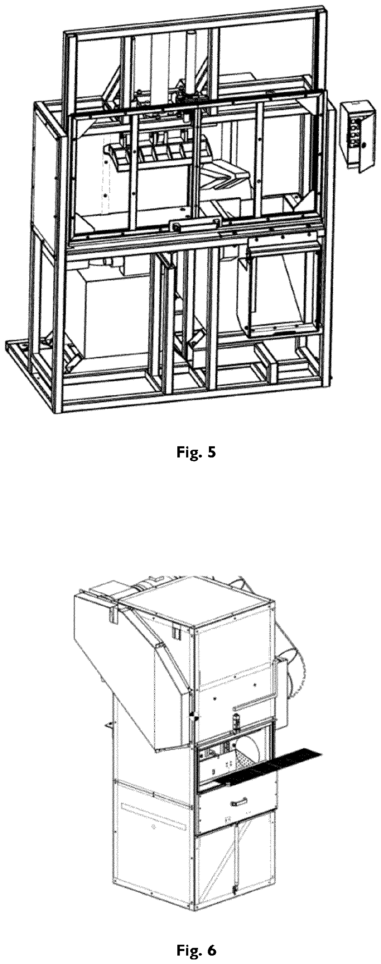

- Fig. 5: shows an example of a cutting station;
- Fig. 6: shows an example of an infeed conveyor;

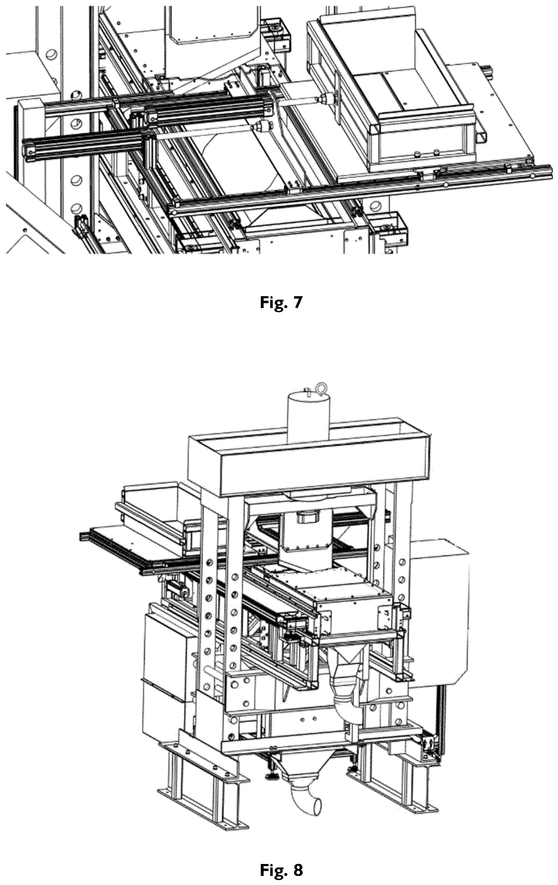

- Fig. 7: shows an example of a weighing module;
- Fig. 8: shows an example of a guillotine;

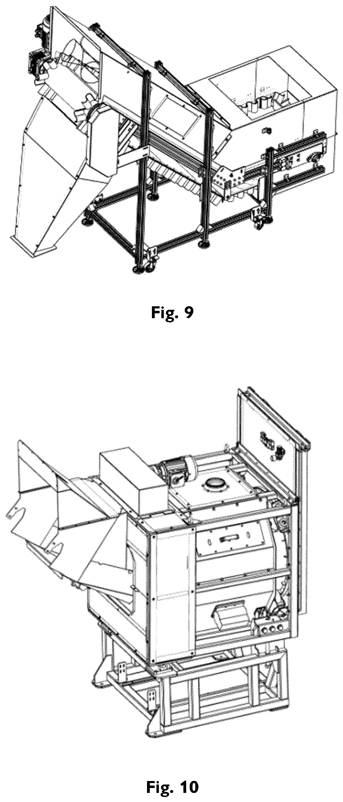

- Fig. 9: shows an example of an ascending conveyor;
- Fig. 10: shows an example of a shaking drum;

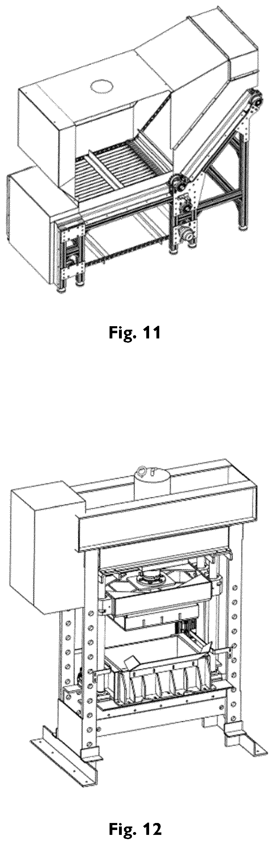

- Fig. 11: shows an example of a grate separator;
- Fig. 12: shows an example of a compacting station;

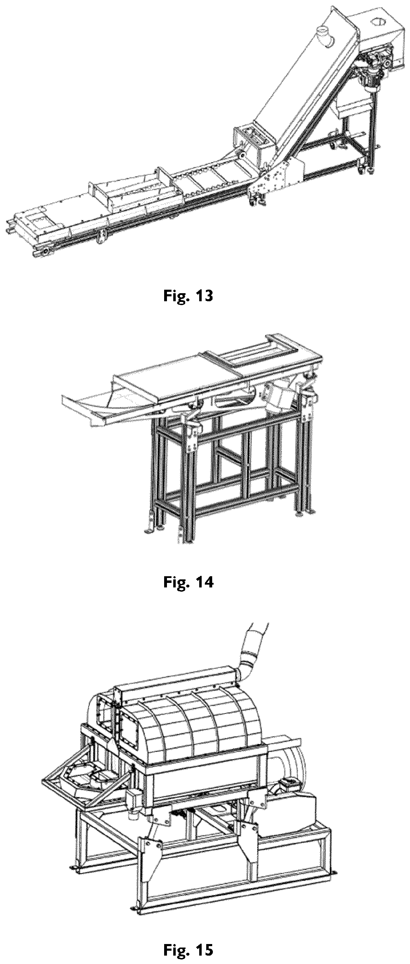

- Fig. 13: shows an example of a magnetic separator and vibrating table;
- Fig. 14: shows an example of a fluidisation separator;
- Fig. 15: shows an example of a conveyor belt;

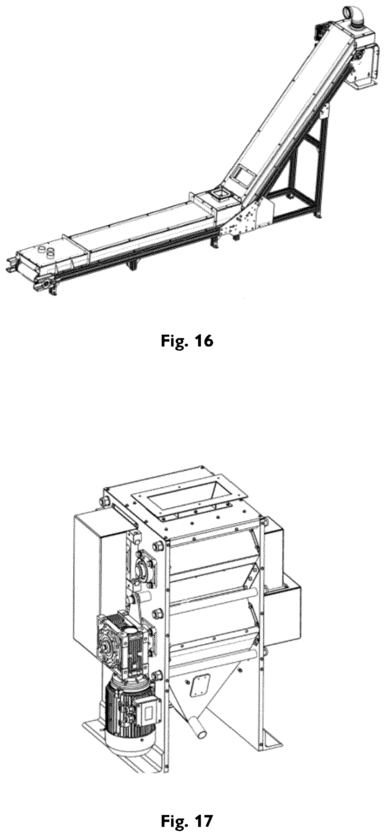

- Fig. 16: shows an example of a crusher;
- Fig. 17: shows an example of an hoovering system;

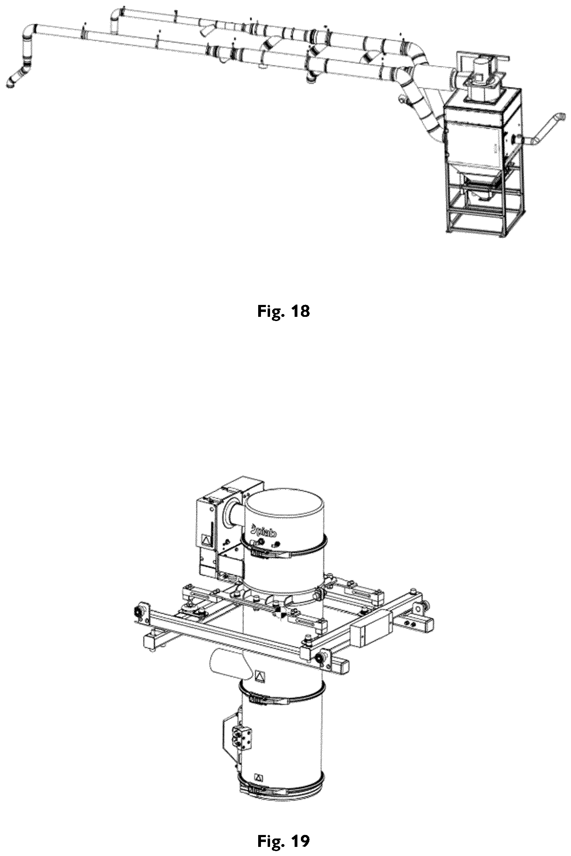

- Fig. 18: shows an example of vacuum transport;
- Fig. 19: shows an example of a grinder and a homogeniser;

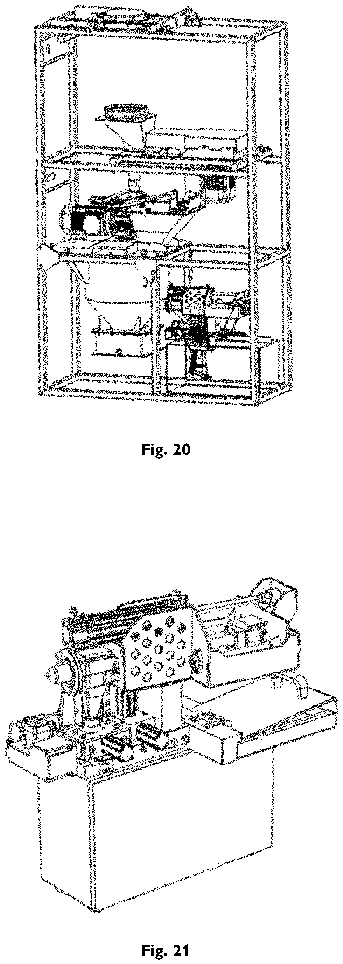

- Fig. 20: shows an example of a sampling station;
- Fig. 21: shows an example of vacuum transport;

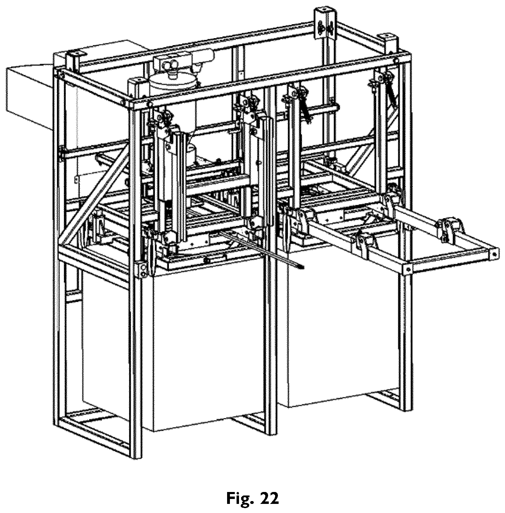

- Fig. 22: shows an example of final storage.

What distinguishes the system according to the present invention is the comprehensive, automatic and mobile recycling process for automotive catalytic converters. On the market it is very common to find individual devices like:
a. Hydraulic shears, used for cutting catalytic converter housings;
b. Chain or ball mills, used to grind the extracted monolith;
c. Vacuum conveyors, used to transport crushed, loose materials like monolith.

The above equipment is used for similar tasks with a team of operators, to carry out the recycling process. The line which has been developed, however, allows one or two operators instead of four and, most importantly, gives the possibility to transport the mobile system to other locations, such as to other countries. Mobility is very important as the largest volumes of raw material are available in developing countries where older cars predominate.

The system, according to the present invention has many advantages, the most important being:
- International mobility of the process, which until now has been linked to company headquarters, stationary locations;
- Higher safety and profitability by reducing the number of hazardous tasks and operators involved;
- Significant compression (approximately five times) of the space required for the process compared to stationary solutions.

The system according to the present invention allows the monolith to be separated from the rest of the catalyst components, then fragmented to a fraction below 1 mm (several hundred microns) and homogenised throughout.

The system according to the present invention comprises the following components:
1. Cutting station
2. Infeed conveyor
3. Weighing module
4. Guillotine
5. Ascending conveyor
6. Shaking drum
7. Grate separator
8. Compacting station
9. Magnetic separator and vibrating table
10. Fluidisation separator
11. Conveyor belt
12. Crusher
13. Hoovering system
14. Vacuum transport
15. Homogeniser and grinder
16. Sampling station
17. Vacuum transport
18. Final storage.

In the embodiment, the system / process line consists of a piping cutting station (1), a bucket conveyor (2) with a weighing module (3), a guillotine (4), an ascending conveyor (5), a shaking drum (6), a grate separator (7), a compacting station (8), a magnetic separator with a vibrating table (9), a fluidisation separator (10), a conveyor belt (11), a crusher (12), a hoovering system (13), a compressor, a PIAB vacuum transport (14), a homogeniser and a grinder (15), a sampling station (16), an EA KRAKOW vacuum transport (17), a final storage (18) and a power generator.

The line is designed for permanent operation by a single Operator. His work consists in cutting the catalytic converter to the required size, getting rid of the piping, which is part of the exhaust system, and placing it in a cup of the bucket conveyor (2) to dry the catalytic converter. The length is verified by means of movable jaws and transferred for further processing in the automated processing station. The operator is responsible for the day-today supervision of process execution and responding to irregularities.

The cut catalyst is transported by the bucket conveyor (2) to the scale (3). Measurement is carried out using four strain gauge beams connected by a totaliser, and the weight of each catalyst is recorded. In this location there is a special measuring system, responsible for determining the length of the catalyst, and the measurement is carried out by the jaws guiding the element under the guillotine (4) blade, where the cut is made. In the feeder prism, the catalyst is moved by a system of two sliding sheets, which also perform the task of stabilising the piece being cut to prevent its movement during cutting. The spliting of the housing and the simultaneous crushing of the monolith by the blade, generates the release of ceramic dust, which is already sucked out at this stage by the hoovering system (13).

The split catalyst is transported by the ascending conveyor (5) to the shaking drum (6), where the rotary motion of the device allows the monolith to be separated from the metal part. The working zone of the drum is equipped with metal carriers located along the chamber. The ceramic dust, created at this stage, is collected by the hoovering system (13), while fragments with a diameter smaller than the drum perforation are transported by the conveyor belt (11) under the working section of the device.

After completion of the process, in the drum separator (6), the catalyst housing components and larger pieces of monolith are collected, by means of a grate separator (7), where the scrap metal is separated from the monolith block residue. The separation takes place by means of a grate with a slot width of 25 mm. The separator (7) equipped with carriers, transports the steel pieces to the compacting station (8), which is designed to reduce their volume.

The monolith is fed via a hopper directly onto the conveyor belt (11), beneath the drum and grate separator, which is the part of the magnetic separator (9). In this further section, the ceramic monolith is separated from small components such as screws, nuts, gaskets, probes or lagging. The ferromagnets attracted by the magnet are transported away from the further part of the separation module, and are detached by gravity only after the magnet's force has ceased.

The remaining material, i.e. paramagnets and diamagnets, fall freely onto a vibrating table, which moves them to a fluidisation separator (10). This type of separator takes advantage of the difference in material density - specific gravity. When feeding the mixed monolith with various components, e.g. metal (non-ferrous metals) or rubber (gaskets) or foam (lagging), the lighter ones are thrown over the side gangues as a result of lifting by air pressure. Additional vibration serves to sort out, leaving heavier items on the bottom.

The material from under the fluidisation separator (10) is transported by conveyor belt (11) to the crusher (12), where the larger monolith particles are crushed. The material collected throughout the process by the hoovering system (13) also reaches the crusher (12). The crushed material is transported to the grinder, and then to the homogeniser (15), from where samples are taken for XRF analysis of the precious element content.

The tested samples are archived for possible verification of the test performed. Samples are taken by the sampling station (16), the entire laboratory enclosed in a small box which performs a series of operations:
(a) Insertion of the sampler into the homogeniser and taking of the sample
(b) Pouring of the sample material into the cup
(c) Compacting the material in the cup
d) Closing the cup with a stopper
e) Measuring the sample 4 times by rotating the sample 90 degrees after each measurement
f) Printing the date and time of the measurement on the stopper
g) Sample storage
h) Re-performing the process for a second sample
i) Averaging of measurement results
j) Printing out a report for a customer.

The remaining material, by means of vacuum transport (17), reaches the final storage (18), from where it is collected by an operator.

A signal column presents the current operating status of the line.

A Beckhoff CX5130-0175 PLC located in the electrical cabinet is responsible for controlling the operation of the machine. Control adjustments are made via a TPM-3515RW HMI panel, together with a WEINTEK cMT-FHDX-220 module, located on the device.

The system according to the present invention has an Human-Machine Interface panel (HMI), preferably a touch panel, which allows all the machines to be controlled in manual mode and the process to be started in automatic mode. The system also includes a number of parameters, messages or alarms on the current status of the entire line.

All the machines are controlled from a master PLC; there are about 20 machines distributed around the container, which requires the creation of cable lines and 4 control cabinets. The software itself must adequately control the operating sequences of the individual machines and their parameters such as speed, pressure, flow, weight, etc.

An important advantage of the present invention is that the operator does not have to work on the machines, so the risk of accidents decreases, the operator is not directly exposed to noise, and the operator is not directly exposed to dust. Furthermore, the mobility of the system allows transport to other countries/regions.

## Claims

1. A mobile, automatic system for treatment of spent ceramic catalysts and recovery of precious metals in an outdoor environment, **characterised in that**
it comprises a piping cutting station (1), a bucket conveyor (2) for transporting the cut catalyst and drying the catalyst with a weighing module (3), a guillotine (4) for cutting the housing and crushing the catalyst monolith simultaneously, an ascending conveyor (5) for transporting the cut catalyst to a shaking drum (6), where the monolith is separated from the metal part of the catalyst, a grate separator (7) for receiving the catalyst housing parts and larger pieces of catalyst monolith, which transports the steel parts of the catalyst to a compacting station (8), to reduce their volume, a magnetic separator with a vibrating table (9), which separates the catalyst material into ferromagnets and the remaining material, which is transported to a fluidisation separator (10), and then, via a conveyor belt (11) to a crusher (12), a hoovering system (13), to remove ceramic dust, a compressor, a first vacuum conveyor (14) for transporting the crushed material from the crusher (12) to a grinder and a homogeniser (15), from where samples are taken by a sampling station (16), to test the precious metal content, and the remaining material is directed to a final storage facility (18) by a second vacuum conveyor (17), to the final storage facility (18), a power generator and a control system, whereby all the components of the system are housed in a transportable container.

2. The system according to claim 1, **characterised in that** it additionally comprises a signal column presenting the current operating status of the system.

3. The system according to claim 1 or 2, **characterised in that** the grate separator (7) has slots with a width of 25 mm.

4. The system according to claim 1, or 2 or 3, **characterised in that** all the components of the system are housed in a shipping container.

5. The system according to any of claims 1-4, **characterised in that** it comprises an HMI control panel, preferably a touch panel for controlling all the machines in manual mode and for starting the process in automatic mode.

6. The system according to any of claims 1-5, **characterised in that** the sampling station (16) performs the following operations:
a. Inserting the sampler into the homogeniser and taking a sample
b. Pouring the sample material into the cup
c. Beating the material in the cup
d. Closing the cup with a stopper
e. Measuring the sample 4 times by rotating the sample by 90 degrees after each measurement
f. Printing the date and time of measurement on the stopper
g. Sample storage
h. Re-performing the process for a second sample
i. Averaging of measurement results
j. Printing out a report for a customer.

7. The system according to any of claims 1-6, **characterised in that** all the components of the system are controlled from a master PLC.
